# EUROPÄISCHE PATENTSCHRIFT

(11) **EP 2 087 291 B1**
(45) Veröffentlichungstag und Bekanntmachung des Hinweises auf die Patenterteilung: **21.09.2016**
(21) Anmeldenummer: 07817874.6
(22) Anmeldetag: 05.11.2007
(51) Int. Cl.: F24D 3/10, G05D 23/19

(54) **ABGLEICHSYSTEM FÜR EINE FUßBODENTEMPERIERUNGS-ANORDNUNG**
EQUALIZATION SYSTEM FOR A FLOOR TEMPERATURE CONTROL ARRANGEMENT
SYSTÈME D'ÉQUILIBRAGE POUR UN ENSEMBLE D'APPORT DE TEMPÉRATURE VOULUE PAR LE SOL

(30) Priorität: 06.11.2006 DE 102006052124
(43) Veröffentlichungstag der Anmeldung: 12.08.2009
(73) Patentinhaber: Danfoss A/S, 6430 Nordborg (DK)
(72) Erfinder: GARM, Fester, 8600 Silkeborg (DK); JENSEN, Jens, Møller, 8700 Horsens (DK)
(74) Vertreter: Knoblauch, Andreas
(86) Internationale Anmeldenummer: PCT/DK2007/000478
(87) Internationale Veröffentlichungsnummer: WO 2008/055498

(56) Entgegenhaltungen:
- EP-A- 0 903 543
- EP-A- 1 640 669
- DE-A1- 19 838 511
- DE-B3-102005 043 255

## Beschreibung

Die Erfindung betrifft Abgleichsystem mit mindestens zwei Temperierungskreisen, von denen jeder eine in einem Fußboden oder in einer Deckenwand verlegte Wärmeträgerleitung mit einem Vorlauf und einem Rücklauf aufweist, wobei an jedem Rücklauf ein Rücklauftemperaturregler mit einem die Temperatur im jeweiligen Rücklauf erfassenden Temperatursensor angeordnet ist und alle Rücklauftemperaturregler ein gleiches Temperatursteuerverhalten aufweisen, wobei der Temperatursensor als Thermostatelement ausgebildet ist und der Rücklauftemperaturregler eine Warmwasserdrosselstelle mit einem ersten Ventilsitz aufweist, der mit einem ersten vom Thermostatelement betätigten Ventilelement zusammenwirkt.

Eine als Fußbodenheizungs-Anordnung ausgebildete Fußbodentemperierungs-Anordnung ist aus DE 199 11 866 A1 bekannt. Die Temperatur an jedem Rücklauf wird erfasst und an eine zentrale Steuereinrichtung weitergemeldet. Die Steuereinrichtung steuert ein Ventil im entsprechenden Vorlauf.

US 6 390 381 B1 zeigt eine ähnliche Fußbodenheizungs-Anordnung, bei der die Vorlauftemperatur und die Rücklauftemperatur erfasst werden. Ein Ventil im Vorlauf wird durch eine Steuereinrichtung so angesteuert, dass die Temperaturdifferenz zwischen Vorlauf und Rücklauf für alle Heizkreise gleich ist.

DE 198 38 511 A1 betrifft eine Ventilgruppe und einen Rücklauftemperaturbegrenzer, insbesondere für Fußbodenheizungen. Die Ventilgruppe weist einen Einlass und einen Auslass auf, die durch in einer Wand verlegte Rohrleitungen gebildet werden. Die Ventilgruppe umfasst weiterhin einen Rücklauftemperaturbegrenzer und ein Raumthermostatventil, die in dieser Reihenfolge hintereinander geschaltet sind. Das Raumthermostatventil weist ein Ventilglied auf, das mit einem Ventilsitz zusammenwirkt.

Derartige Ventilgruppen sollen bei Fußbodenheizungen eine energiesparende Einzelraumregelung ermöglichen.

Fußbodenheizungs-Anordnungen erfreuen sich zunehmender Beliebtheit. Sie ermöglichen es, einen Raum gleichmäßig zu beheizen. Die Wärme wird dem Raum über den Fußboden zugeführt, so dass dieser eine für einen Bewohner angenehme Temperatur bekommt. Das gleiche gilt dann, wenn der Fußboden oder die Deckenwand eines Raums zum Kühlen verwendet wird. Um die nachfolgende Erläuterung zu vereinfachen, wird die Erfindung anhand einer Fußbodenheizung beschrieben. Sie ist aber in entsprechender Weise auch zur Raumkühlung über die Decke oder allgemein zur Temperierung eines Raums über von einem Wärmeträger durchströmte Leitungen in irgendeiner Wand des Raumes anwendbar.

Allerdings ist es relativ kompliziert, in einer Wohnung oder einem Gebäude mehrere Heizkreise der Fußbodenheizung aufeinander abzustimmen. In einem kleinen Raum wird nur eine kurze Heizmittelleitung verlegt, weil diesem Raum relativ wenig Wärme zugeführt werden muss. In einem großen Raum, dem mehr Wärme zugeführt werden muss, ist eine entsprechend längere Heizmittelleitung erforderlich, damit alle Bereiche dieses Raumes entsprechend beheizt werden können. Dies führt dazu, dass die Heizmittelleitung im kleineren Raum einen geringeren Strömungswiderstand aufweist als die Heizmittelleitung im größeren Raum. Das Wärmeträgermedium, in der Regel heißes Wasser, teilt sich im Verhältnis der Strömungswiderstände auf, so dass wesentlich mehr Wärmeträgermedium durch die Heizmittelleitung des kleineren Raumes fließt, was genau das Gegenteil dessen ist, was man eigentlich erreichen möchte.

Der Installateur, der die Fußbodenheizung installiert, muss also vor oder spätestens bei der Inbetriebnahme bestimmte Drosselstellen einbauen und einstellen, die die Aufteilung des Wärmeträgermediums auf die einzelnen Räume im gewünschten Verhältnis sicherstellen. In der Regel verwendet der Installateur dazu einen Durchflussindikator in jedem Heizkreis, der den Durchfluss sichtbar macht. Der Installateur wird dann die Drosseln so einstellen, dass der Durchfluss in allen Heizkreisen gleich ist oder einer vorbestimmten Verteilung gehorcht. Diese Vorgehensweise ist aber relativ aufwendig und fehleranfällig. Bei einem abnehmenden Ausbildungsstandard des bei der Installation tätigen Personals kann man nicht mehr unbedingt davon ausgehen, dass die Einstellungen richtig vorgenommen werden.

Der Erfindung liegt die Aufgabe zugrunde, die Verteilung der Wärmeleistung auf einzelne Heizkreise zu vereinfachen.

Diese Aufgabe wird bei einem Abgleichsystem der eingangs genannten Art dadurch gelöst, dass an jedem Rücklauf ein Rücklauftemperaturregler eine Kaltwasserdrosselstelle mit einem zweiten Ventilsitz aufweist, der mit einem zweiten von einem Aktuatorelement betätigten Ventilelement zusammenwirkt.

Der Rücklauftemperaturregler sorgt dafür, dass das rückströmende Wärmeträgermedium auf einer vorbestimmten Temperatur gehalten wird. Die Erfindung wird im folgenden anhand von heißem Wasser als Beispiel für das Wärmeträgermedium beschrieben. Sie kann jedoch auch bei anderen Wärmeträgermedien und auch zur Kühlung oder allgemein zur Temperierung verwendet werden.

Das den Heizkreis durchströmende Wärmeträgermedium wird dem Heizkreis über den Vorlauf, der auch als Zufluss bezeichnet werden kann, zugeführt und über den Rücklauf, der auch als Abfluss bezeichnet werden kann, abgeführt. Der Rücklauftemperaturregler sorgt also dafür, dass das den Heizkreis verlassende Wasser immer eine vorbestimmte Temperatur hat. Die notwendige Temperaturinformation wird vom Temperatursensor bereitgestellt. Wenn das Wasser beim Verlassen des Heizkreises noch zu heiß ist, dann drosselt der Rücklauftemperaturregler stärker. Dementsprechend wird der Rücklauftemperaturregler bei einem kleineren Raum, bei dem weniger Wärme vom Heizungswasser an den Raum abgegeben wird als bei einem größeren Raum, den Durchfluss stärker drosseln, weil das Heizungswasser nach dem Durchströmen der Heizungsleitung noch eine höhere Temperatur hat. Diese Drosselung erfolgt automatisch, so dass sämtliche Heizkreise, die an die gleiche Fußbodenheizungs-Anordnung angeschlossen sind, gegenseitig im Gleichgewicht gehalten werden können. Ein Eingriff eines Installateurs ist damit praktisch nicht mehr oder nur in einem vereinfachten Umfang erforderlich.

Die Rücklauftemperaturregler, also die Kombination aus Drosselorgane und Temperatursensor und gegebenenfalls Steuereinheit haben sozusagen die gleichen Kennlinien, also die gleiche Abhängigkeit zwischen der Temperatur und dem Durchlass. Im einfachsten Fall kann dies dadurch erreicht werden, dass die Rücklauftemperaturregler gleich aufgebaut sind, also gleiche Thermostatelemente und gleiche geometrische Abmessungen oder gleiche Temperaturfühler, gleiche Drosseleinrichtungen und gleiche Steuerungen aufweisen. In diesem Fall ist es besonders einfach, automatisch einen Ausgleich eines Heizkreises zu realisieren, also die Abstimmung von mehreren Heizkreisen, die in einer gemeinsamen Fußbodenheizungs-Anordnung verwendet werden. Eine derartige Anordnung ist dynamisch, d.h. sie passt sich automatisch wechselnden Anforderungen an.

Vorzugsweise ist ein Verteiler vorgesehen, in den jeder Rücklauf mit einem Anschluss mündet, wobei der Rücklauftemperaturregler dem Anschluss zugeordnet ist. Dies ist eine besonders einfache Realisierungsmöglichkeit. Man kann dann den Verteiler, der hier auch als "Rücklaufverteiler" bezeichnet werden kann, mehr oder weniger fertig vormontieren, also auch mit dem Rücklauftemperaturregler. Man muss diesen Rücklaufverteiler nur noch einbauen und die Rückläufe anschließen. Danach ist die Fußbodenheizungs-Anordnung nicht nur fertig montiert. Sie ist auch automatisch abgeglichen.

Hierbei ist der Temperatursensor als Thermostatelement ausgebildet. Ein Thermostatelement ermittelt nicht nur die Temperatur, sondern erzeugt auch eine Betätigungskraft für ein Drosselelement oder wirkt sogar selbst als Drosselelement, so dass der Temperatursensor und die Regeleinrichtung im Grunde miteinander gekoppelt sind. Dies vereinfacht den Aufbau der Anordnung. Der Rücklauftemperaturregler ist in diesem Fall als Rücklaufthermostat ausgebildet. Das Thermostatelement dient also nicht nur dazu, die Temperaturinformation zu gewinnen, sondern auch dazu, die Betätigungskraft für das Drosselorgan zu erzeugen. Das Thermostatelement ist also Temperatursensor und Antrieb für die Drosselstelle oder sogar das Drosselorgan. Ebenso ist es möglich, dass der Temperatursensor beispielsweise als elektrischer Temperatursensor ausgebildet ist. Die vom Temperatursensor ausgegebenen Daten können dann beispielsweise durch eine elektronische Steuerung verarbeitet werden. Die elektronische Steuerung kann dann das entsprechende Drosselorgan (Ventilelement) des Rücklauftemperaturreglers entsprechend öffnen bzw. schließen. Dazu kann ein Aktuatorelement verwendet werden, welches beispielsweise als Bimetalleinrichtung, als elektrischer Motor, als Schrittmotor usw. ausgebildet ist.

Vorzugsweise weist der Rücklauftemperaturregler eine Warmwasserdrosseistelle und/oder eine Kaltwasserdrosselstelle auf, wobei die Warmwasserdrosselstelle einen ersten Ventilsitz aufweist, der mit einem ersten vom Thermostatelement betätigten Ventilelement zusammenwirkt, und die Kaltwasserstelle weist einen zweiten Ventilsitz auf, der mit einem zweiten von einem Aktuatorelement, insbesondere einem Thermostatelement betätigten Ventilelement zusammenwirkt. Man kann den Rücklauftemperaturregler nicht nur bei der Beheizung des Raumes verwenden, bei dem ein erhitztes Wärmeträgermedium, also beispielsweise heißes Wasser, durch die Heizmittelleitung geführt wird, sondern auch bei einer Kühlung des Raumes, bei der kaltes Wärmeträgermedium, also beispielsweise kaltes Wasser, durch die Heizmittelleitung geleitet wird. Auch dann, wenn ein kaltes Wärmeträgermedium durch den Heizkreis geführt wird, entsteht das Problem, dass die einzelnen Heizkreise aufeinander abgestimmt werden müssen. Das Verhältnis, mit dem sich das Wärmeträgermedium auf die einzelnen Heizkreise aufteilt, richtet sich nach dem Verhältnis der Strömungswiderstände. Auch wenn es möglich ist, den Rücklauftemperaturregler so auszubilden, dass dieser lediglich eine Warmwasserdrosselstelle bzw. eine Kaltwasserdrosselstelle aufweist, ist es besonders vorteilhaft, wenn der Rücklauftemperaturregler sowohl eine Warmwasserdrosselstelle, als auch eine Kaltwasserdrosselstelle aufweist. Wenn man beim Rücklauftemperaturregler zwei unterschiedliche Drosselstellen vorsieht, nämlich einmal für warmes Wasser und einmal für kaltes Wasser (oder ein entsprechend anderes Wärmeträgermedium) dann kann man mit dem gleichen Rücklauftemperaturregler sowohl die Beheizung als auch die Kühlung des Raumes so steuern, dass im Grunde alle Räume die entsprechende Wärme- beziehungsweise Kältemenge erhalten.

Vorzugsweise sind beide Ventilelemente vom gleichen Aktuatorelement, insbesondere Thermostatelement betätigt. Damit wird der Aufbau relativ einfach. Das Thermostatelement dehnt sich bei einer Erwärmung aus und zieht sich bei einer Abkühlung zusammen. Beide Bewegungsrichtungen kann man dazu nutzen, dass die einzelnen Drosselstellen mehr oder weniger stark gedrosselt werden. Wenn die Warmwasserdrosselstelle stärker gedrosselt wird, dann öffnet die Kaltwasserdrosselstelle und umgekehrt. Ab einer gewissen Öffnung spielt die Drosselung durch die geöffnete Drosselstelle dann keine größere Rolle mehr, so dass dann ausschließlich die Drosselstelle bestimmend für den Durchfluss ist, die in Schließrichtung beaufschlagt ist.

Vorzugsweise ist mindestens ein Ventilelement durch das jeweils zugeordnete Aktuatorelement, insbesondere Thermostatelement gebildet. Man benötigt also keine zusätzlichen Bauelemente. Das Ventilelement muss bei einer Drosselung nicht am Ventilsitz anliegen, sondern es reicht aus, wenn ein Spalt, der zwischen dem Ventilelement und dem Ventilsitz gebildet ist, in seiner Größe veränderbar ist. Dementsprechend reicht das Thermostatelement als Ventilelement ohne weiteres aus.

Vorzugsweise weist das Aktuatorelement, insbesondere das Thermostatelement eine Durchmesservergrößerung auf, die das zweite Ventilelement bildet. Man kann also für das erhitzte Wärmeträgermedium und für das gekühlte Wärmeträgermedium unterschiedliche Spaltgrößen verwenden. Für das gekühlte Wärmeträgermedium kann der Durchtrittsquerschnitt größer gehalten werden.

Vorzugsweise ist der Rücklauftemperaturregler innerhalb einer mit dem Anschluss verbundenen Leitung angeordnet. Damit bleibt die Baugröße des Verteilers klein. Größere Bauteile, die nach außen vorstehen, können vermieden werden. Insbesondere kann der Rücklauftemperaturregler in den Anschluss integriert werden.

Vorzugsweise weist das mindestens eine Aktuatorelement, insbesondere das mindestens eine Thermostatelement eine in Strömungsrichtung veränderbare Länge auf. Auch damit wird die Baugröße des Verteilers klein gehalten. Das Thermostatelement verändert seine Länge praktisch nur innerhalb des Rücklaufs, eines diesem zugeordneten Anschlusses oder einer damit verbundenen Leitung. Es ändert seine Ausdehnung aber nicht so, dass diese Änderung nach außen spürbar wäre und somit eine vergrößerte Baugröße erfordert.

Vorzugsweise ist eine Trenneinrichtung vorgesehen, die das Aktuatorelement, insbesondere das Thermostatelement vom Wärmeträgermedium in eine Sammelleitung des Verteilers trennt, von der die Anschlüsse abzweigen. Damit wird das Thermostatelement ausschließlich von dem Wärmeträgermedium thermisch beaufschlagt, das durch den Rücklauf aus dem einzelnen Heizkreis zurückfließt. Damit lässt sich der Durchfluss durch diesen Heizkreislauf genau steuern. Eine Vermischung mit einem Wärmeträgermedium aus einem anderen Heizkreislauf wird durch das Trennelement vermieden, so dass klare Verhältnisse eingestellt werden können.

Hierbei ist bevorzugt, dass eine bewegliche Ventilsitzeinrichtung, insbesondere die Trenneinrichtung den ersten Ventilsitz bildet. Mit einer derartigen beweglichen Ventilsitzeinrichtung ist es möglich, das Ventil quasi von zwei Seiten aus zu steuern. Denn schlussendlich kommt es beim Ventil auf die relative Lage zwischen Ventilsitz und Ventilstift an. Wenn insbesondere die Trenneinrichtung den ersten Ventilsitz bildet, sind weitere Bauteile nicht erforderlich.

Vorzugsweise ist die bewegliche Ventilsitzeinrichtung, insbesondere die Trenneinrichtung von außen in Richtung der Längenänderung des Aktuatorelements, insbesondere des Thermostatelements verlagerbar. Damit lässt sich eine gewisse Voreinstellung für die Warmwasserdrosselstelle bewirken. Wenn der Ventilsitz, der an der Trenneinrichtung angeordnet ist, näher an das Thermostatelement herangerückt wird, dann schließt die Warmwasserdrosselstelle früher. Umgekehrt schließt sie später, wenn die Trenneinrichtung vom Thermostatelement entfernt wird.

Vorzugsweise bildet die bewegliche Ventilsitzeinrichtung, insbesondere die Trenneinrichtung auf der dem ersten bzw. dem zweiten Ventilsitz gegenüberliegenden Seite einen dritten Ventilsitz, der mit einem dritten Ventilelement zusammenwirkt, das von außen betätigbar ist. Das dritte Ventilelement kann dann verwendet werden, um Einfluss auf den Durchfluss durch den jeweiligen Heizkreis zu nehmen, wobei der Heizkreis dann beispielsweise in Abhängigkeit von der in dem entsprechenden Raum herrschenden Temperatur gesteuert werden kann. Das dritte Ventilelement kann beispielsweise durch einen Thermostataufsatz gesteuert werden, der über einen Kapillarleitung mit einem Wärmefühler in dem entsprechenden Raum verbunden ist. Es ist auch möglich, das dritte Ventilelement durch einen motorischen Antrieb zu verlagern, der in Abhängigkeit von einer Raumtemperatur gesteuert wird. Es ist möglich, dass die vorgeschlagene, von außen erfolgende Betätigung mit einem reinen Warmwasserrücklauftemperaturregler, einem reinen Kaltwasserrücklauftemperaturregler bzw. einer Kombination aus Warmwasser- und Kaltwasserrücklauftemperaturregler realisiert wird. Demzufolge sind insbesondere Paarungen wie ein erster und ein dritter Ventilsitz (ohne dass ein zweiter Ventilsitz vorliegen muss) bzw. ein zweiter und ein dritter Ventilsitz (ohne dass ein erster Ventilsitz vorliegen muss) möglich. Natürlich ist auch eine Kombination aus erstem, zweitem und drittem Ventilsitz möglich.

Vorzugsweise ist das dritte Ventilelement in einem Einsatz gelagert, an dem die bewegliche Ventilsitzeinrichtung, insbesondere die Trenneinrichtung befestigt ist. Dies vereinfacht die Montage des Verteilers. Man muss lediglich den Einsatz in das Gehäuse einschrauben und hat dann praktisch automatisch die Trenneinrichtung an der richtigen Stelle platziert.

Vorzugsweise ist der Einsatz im Gehäuse parallel zur Richtung der Längenänderung des dem ersten bzw. dem zweiten Ventilelement zugeordneten Aktuatorelements, insbesondere Thermostatelements verlagerbar. Man kann den Einsatz dann noch verwenden, um die Trenneinrichtung und damit den ersten Ventilsitz richtig zu positionieren.

Vorzugsweise ist das mindestens eine Thermostatelement als Dehnstoffelement mit Feststoff-Füllung ausgebildet. Ein derartiges Dehnelement hat zwar nur einen relativ geringen Hub. Dafür ist dieser Hub aber im wesentlichen unabhängig von den herrschenden Drücken.

Auch ist es von Vorteil, wenn jedes Aktuatorelement, insbesondere jedes Thermostatelement eine Rückstelleinrichtung aufweist. Die Rückstelleinrichtung kann beispielsweise durch eine Druckfeder gebildet sein. Man stellt damit sicher, dass das Thermostatelement immer seine in Abhängigkeit von der Temperatur kleinste Länge aufweist.

Vorzugsweise weist das Aktuatorelement, insbesondere das Thermostatelement eine Dichtung auf, die einen Spalt zwischen zwei gegeneinander bewegbaren Teilen abdichtet, wobei die Dichtung als Rückstellfeder ausgebildet ist. Damit ist man bei der Verwendung unterschiedlicher Thermostatelemente freier. Man kann beispielsweise auch eine Wachspatrone oder einen Wachsthermostaten verwenden, die an und für sich nicht innerhalb eines flüssigen Wärmeträgermediums, insbesondere nicht innerhalb von Wasser, eingesetzt werden sollten. Bei einer derartigen Wachspatrone wird ein Stößel oder Fortsatz durch eine in einem Gehäuse angeordnete Dehnstoff-Füllung nach außen verdrängt. Dementsprechend bewegt sich der Stößel gegenüber dem Gehäuse. Zwischen dem Stößel und dem Gehäuse muss dabei ein kleiner Spalt vorhanden sein, durch den im ungünstigen Fall Wärmeträgermedium eindringen könnte. Dieses Eindringen wird durch die Dichtung zuverlässig verhindert. Man nutzt die Dichtung aber gleichzeitig auch als Rückstellfeder aus, so dass bei einem Absinken der Temperatur der Stößel in das Gehäuse zurückgedrückt wird.

In einer alternativen Ausgestaltung kann vorgesehen sein, dass der Rücklauftemperaturregler als elektrisch arbeitende Regelvorrichtung ausgebildet ist. In diesem Fall meldet der Temperatursensor die Temperatur im Rücklauf an einen Regler, der seinerseits eine verstellbare Drosseleinrichtung, beispielsweise ein Ventil, verstellt. Die Drosseleinrichtung, der Temperatursensor und die Regeleinrichtung bilden dann einen geschlossenen Regelkreis, mit dem es ebenfalls möglich ist, die Temperatur im Rücklauf konstant zu halten.

Hierbei ist es bevorzugt, dass die Dichtung einen gewellten Mantel aufweist. Damit erhöht man die mögliche Bewegungslänge des Stößels gegenüber dem Gehäuse. Für das Rückstellen des Stößels in das Gehäuse ist normalerweise keine größere Kraft erforderlich. Ein gewellter Mantel erlaubt dabei nicht nur eine große Bewegungslänge des Stößels, sondern bringt auch eine ausreichende Rückstellkraft auf.

Die Erfindung wird im folgenden anhand eines bevorzugten Ausführungsbeispiels in Verbindung mit der Zeichnung beschrieben. Hierin zeigen:
- Fig. 1: eine schematische Darstellung einer Fußbodenheizungs-Anordnung,
- Fig. 2: einen schematischen Schnitt durch einen Rücklaufthermostaten,
- Fig. 3: einen schematischen Schnitt durch eine abgewandelte Ausführungsform eines Rücklaufthermostaten,
- Fig. 4: eine abgewandelte Ausführung entsprechend Fig. 1 und
- Fig. 5: eine abgewandelte Ausführung entsprechend Fig. 2.

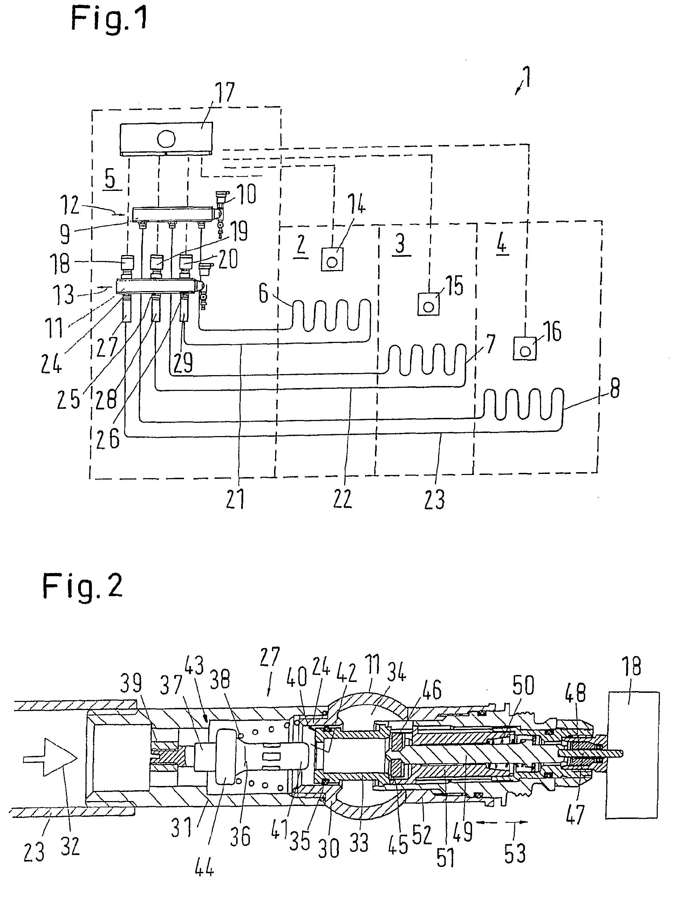

Fig. 1 zeigt eine Fußbodenheizungs-Anordnung 1 für eine Wohnung mit mehreren beheizten Räumen 2, 3, 4 und einem Technikraum 5. In jedem beheizten Raum 2-4 ist eine Heizmittelleitung 6-8 im Fußboden verlegt. Diese Heizmittelleitungen 6-8 sind hier nur schematisch dargestellt. Üblicherweise werden sie in Form einer doppelten Spirale im Fußboden verlegt, wobei immer ein Abschnitt, der von einem wärmeren Wärmeträgermedium und ein Abschnitt, der von einem kälteren Wärmeträgermedium durchflossen ist, benachbart angeordnet sind.

In entsprechender Weise kann man durch die Heizmittelleitungen 6-8 auch ein kälteres Medium leiten, um den Raum oder die Räume zu kühlen. Wenn die Kühl-Funktion vorherrschen soll, ist es zweckmäßig, die Heizmittelleitungen in den Decken der Räume zu verlegen.

Die Versorgung der einzelnen Heizmittelleitungen 6-8 erfolgt über einen Eingangsverteiler 9, der mit einem Zuflusssteuerventil 10 versehen ist. Das von den einzelnen Heizmittelleitungen 6-8 zurückströmende Wärmeträgermedium gelangt zu einem Ausgangsverteiler 11. Ein Zufluss 12 zum Eingangsverteiler 9 und ein Abfluss 13 vom Ausgangsverteiler 11 sind hier lediglich schematisch durch Pfeile dargestellt.

Jeder Raum 2-4 weist einen Temperaturfühler 14-16 auf. Die Temperaturfühler 14-16 sind mit einer gemeinsamen Steuereinrichtung 17 verbunden. Diese Verbindung ist hier durch gestrichelte Linien dargestellt. Sie muss nicht mechanisch vorhanden sein. Für die Verbindung zwischen den Temperaturfühler 14-16 und der Steuereinrichtung 17 kann man auch eine leitungslose Übertragungsstrecke verwenden, beispielsweise Funk, Infrarot, Ultraschall oder dergleichen.

Die Steuereinrichtung 17 steuert für jede Heizmittelleitung 6-8 einen Antrieb 18-20 eines Ventils, das in Fig. 2 näher dargestellt ist.

Jede Heizmittelleitung 6-8, d.h. jeder Heizkreis eines jeden beheizten Raumes 2-4 ist über einen Rücklauf 21-23 mit dem Ausgangsverteiler 11 verbunden. Hierbei weist der Ausgangsverteiler 11 eine der Anzahl von Heizkreisen oder Heizmittelleitungen 6-8 entsprechende Anzahl von Anschlüssen 24-26 auf, wobei an jedem Anschluss ein Rücklaufthermostat 27-29 angeordnet ist.

Ein derartiger Rücklaufthermostat 27 ist in Fig. 2 schematisch dargestellt. Die anderen Rücklaufthermostate 28, 29 sind entsprechend aufgebaut.

Ein Gehäuse 30 des Verteilers 11 ist mit einer Mehrzahl von Anschlüssen 24-26 versehen, von denen in Fig. 2 nur der Anschluss 24 dargestellt ist. An den Anschluss 24 schließt sich ein rohrförmiger Stutzen 31 des Rücklaufthermostaten 27 an. An den Stutzen 31 ist der Rücklauf 23 der Heizmittelleitung 8 angeschlossen. Durch einen Pfeil 32 ist die Strömungsrichtung durch den Rücklauf 23 dargestellt.

Der Stutzen 31 ist durch eine Trenneinrichtung 33 von einer Sammelleitung 34 getrennt, die im Ausgangsverteiler 11 ausgebildet ist. In diese Sammelleitung 34 münden alle Anschlüsse 24-26.

Die Trenneinrichtung 33 ist durch eine hohlzylindrische Hülse gebildet. Diese Hülse ist mit einer Dichtung 35 gegenüber dem Anschluss 24 abgedichtet. Damit sorgt die Trenneinrichtung 33 dafür, dass Wärmeträgermedium 34 in dem Ausgangsverteiler 11 sich nicht mit Wärmeträgermedium im Stutzen 31 vermischen kann, so dass das Wärmeträgermedium innerhalb des Stutzens 31 immer nur die Temperatur aufweist, die das vom Raum 4 zurückfließende Wärmeträgermedium hat.

Im Stutzen 31 ist ein Thermostatelement 36 angeordnet, das im vorliegenden Ausführungsbeispiel als Wachspatrone ausgebildet ist. Anstelle von Wachs kann natürlich auch ein anderer Dehnstoff verwendet werden. Bevorzugt ist aber ein Feststoff als Dehnstoff, der ähnliche Eigenschaften hat wie Wachs.

Das Thermostatelement 36 weist einen Fortsatz 37 auf, der in Abhängigkeit von der herrschenden Temperatur mehr oder weniger weit aus dem Thermostatelement 36 herausgedrückt wird. Damit der Fortsatz 37 immer, soweit es die Temperatur zulässt, in das Thermostatelement 36 hineingedrückt wird, ist eine Rückstellfeder 38 vorgesehen.

Der Fortsatz 37 stützt sich an einem Widerlager 39 ab, das im Stutzen 31 ausgebildet ist.

Die Trenneinrichtung 33 bildet an ihrer dem Thermostatelement 36 zugewandten Stirnseite einen ersten Ventilsitz 40, mit dem das Thermostatelement 36 zusammenwirkt. Man kann daher das vordere Ende 41 des Thermostatelements 36 als erstes Ventilelement ansehen, das mit dem ersten Ventilsitz 40 zusammenwirkt. Das erste Ventilelement 41 bildet mit dem ersten Ventilsitz 40 eine Drosselstelle, die den Durchfluss durch den Rücklaufthermostaten 27 bestimmt. Je höher die Temperatur des durch den Rücklauf 23 zurückströmenden Wärmeträgermediums ist, desto mehr verlängert sich das Thermostatelement 36 und desto stärker verringert sich ein Spalt 42 zwischen dem Thermostatelement 36 und dem ersten Ventilsitz 40, so dass das Wärmeträgermedium stärker gedrosselt wird.

In dem Bereich, wo das Widerlager 39 angeordnet ist, weist der Stutzen 31 eine Verringerung seines Innendurchmessers auf. Am Übergang vom verringerten Durchmesser zum größeren Durchmesser ist ein zweiter Ventilsitz 43 angeordnet, mit dem ein Abschnitt 44 des Thermostatelements 36 zusammenwirkt, der einen vergrößerten Durchmesser aufweist. Auf diesen Abschnitt 44 wirkt auch die Rückstellfeder 38, die sich im übrigen am Anschluss 24 abstützt. Der Abschnitt 44 bildet ein zweites Ventilelement, das mit dem zweiten Ventilsitz 43 zusammenwirkt. Der zweite Ventilsitz und das zweite Ventilelement bilden eine Drosselstelle für ein gekühltes Wärmeträgermedium, das zum Kühlen des Raumes 2-4 verwendet wird, indem es die Heizmittelleitung 6-8 durchströmt.

Wenn das Wärmeträgermedium kälter ist, dann verkürzt das Thermostatelement 36 seine Länge. Der Fortsatz 37 wird weiter in das Thermostatelement 36 eingefahren, so dass sich der Abschnitt 44 des Thermostatelements 36 stärker an den zweiten Ventilsitz 43 annähert. Damit wird das gekühlte Wärmeträgermedium so lange gedrosselt, bis es genügend Wärme aus dem jeweils gekühlten Raum 2-4 aufgenommen hat.

Es kann allerdings auch günstig sein, die Steuerung für die obere Rücklauftemperatur (für eine Beheizung des Raumes 2-4) und die Steuerung für die untere Rücklauftemperatur (für eine Kühlung des Raumes 2-4) durch voneinander getrennte Thermostatelemente durchführen zu lassen. Trotz der Verwendung von zwei Thermostatelementen kann die Konstruktion dann kostengünstiger sein, weil man dann jedes Thermostatelement auf die jeweilige Temperatur abstimmen kann. Auch ist vielfach zu beobachten, dass das Temperatur/Längen-Verhältnis eines Thermostatelements nicht linear ist. Durch die Verwendung von zwei Thermostatelementen ist es auch möglich, die maximale Betätigungslänge eines Thermostatelements kürzer zu halten.

Weiterhin ist es möglich, den in Fig. 2 dargestellten Rücklaufthermostat 27 ohne den zweiten Ventilsitz 43 auszubilden. Es liegt dann lediglich ein erster Ventilsitz 40 sowie ein drittes Ventilelement 46 vor. Eine derartige Ausführung ist insbesondere für reine Heizungsanlagen vorteilhaft. Derartige reine Heizungsanlagen sind in vielen Ländern der gemäßigten Breiten und in kälteren Gebieten nach wie vor die Regel.

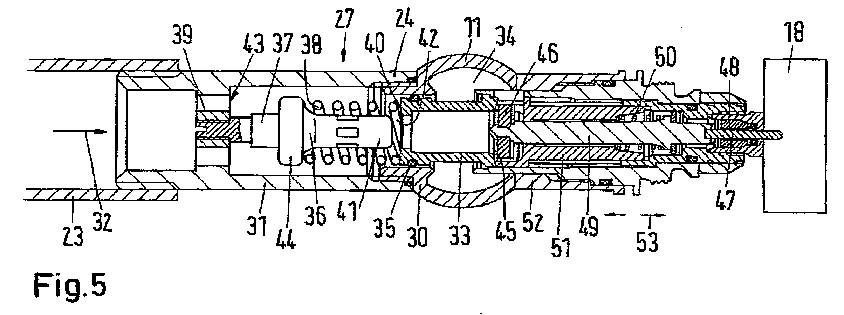

Der zweite Ventilsitz 43 kann bei dem in Fig. 2 dargestellten Rücklaufthermostat 27 beispielsweise dadurch vermieden werden, dass die Verringerung des Innendurchmessers des Stutzens 31 in einem Bereich erfolgt, der weiter in Richtung zum Rücklauf 23 hin versetzt liegt. Dies ist beim in Fig. 5 dargestellten Ventil der Fall.

Gegebenenfalls kann auch der Innendurchmesser des Stutzens 31 durchgängig konstant gehalten werden. Möglich ist es auch, den Abschnitt 44 verkleinert auszubilden oder fortzulassen. Die Rückstellfeder 38 muss sich dann natürlich an anderen Bereichen des Thermostatelements 36 abstützen. Denkbar wäre es beispielsweise, entsprechende Aufnahmenuten oder Laschen vorzusehen. Auch ist es möglich, den Abschnitt 44 nicht durchgängig radial umlaufend auszubilden, sondern lediglich auf einzelne, kleinere radiale Abschnitte zu beschränken (beispiels-weise zwei, drei oder vier Abschnitte mit einer radialen Länge von jeweils 5°).

Derartige Ausbildungen können sich als vorteilhaft erweisen, wenn beispielsweise ein stark abgekühlter Raum erstmalig wieder beheizt werden soll. Bei einer Bauausführung mit einem zweiten Ventilsitz 43 könnte das Rücklaufthermostat ansonsten aufgrund der niedrigen Temperatur des im Rücklauf 23 zurückfließenden Wassers die Kaltwasserdrosselstelle 43 schließen. Dadurch würde sich der erste Aufheizvorgang unnötig verlängern.

Die Trenneinrichtung 33 bildet auf ihrer dem ersten Ventilsitz 40 abgewandten Seite einen dritten Ventilsitz 45, mit dem ein drittes Ventilelement 46 zusammenwirkt, das von dem Ventilantrieb 18 betätigbar ist (wobei es möglich ist, dass kein zweiter Ventilsitz 43 vorgesehen ist). Der Ventilantrieb 18 wirkt dabei auf einen Stift 47, der durch eine Stopfbuchse 48 geführt ist und seinerseits einen Stößel 49 beaufschlagt, an dem das dritte Ventilelement 46 befestigt ist. Der Stößel 49 wird durch eine Feder 50 in Öffnungsrichtung beaufschlagt.

Der Ventilantrieb 18 wird durch die Steuereinrichtung 17 in Abhängigkeit von einer Temperatur gesteuert, die mit Hilfe des Temperaturfühlers 16 ermittelt wird. Das durch das dritte Ventilelement 46 und den dritten Ventilsitz 45 gebildete Ventil bewirkt also eine thermostatische Steuerung der Raumtemperatur.

Der Stößel 49 ist in einem Einsatz 51 gelagert. An diesem Einsatz ist auch die Trenneinrichtung 33 befestigt. Der Einsatz 51 ist in das Gehäuse 30, genauer gesagt, einen Fortsatz 52 des Gehäuses 30, eingeschraubt. Durch Weiterhereinschrauben oder Weiterherausschrauben kann man die Position des Einsatzes 51 in Richtung eines Doppelpfeils 53 verlagern. Durch diese Verlagerung wird dann auch der Einsatz 33 mehr an das Thermostatelement 36 angenähert oder weiter vom Thermostatelement 36 entfernt. Damit lässt sich beispielsweise eine gewisse Voreinstellung der Rücklauftemperatur vornehmen.

Anstelle eines mit den Rücklaufthermostaten 27-29 zusammengefassten Ventils für die Steuerung der Raumtemperatur kann man natürlich auch ein getrenntes Thermostatventil herkömmlicher Art verwenden.

Dadurch, dass das Thermostatelement 36 im Stutzen 31 angeordnet ist und sozusagen in Längsrichtung, also der Richtung seiner Längenänderung, vom Wärmeträgermedium umströmt wird, ist ein zusätzlicher Bauraum für das Thermostatelement nicht erforderlich.

Mit einem Ausgangsverteiler 11, wie er in der Zeichnung dargestellt ist, lässt sich ein automatischer Abgleich zwischen verschiedenen Heizkreisen durchführen. Man kann durch die Verwendung der Rücklaufthermostaten 27-29 eine sehr bequeme Montage realisieren. Einstellarbeiten sind praktisch nicht erforderlich. Wenn alle Rücklaufthermostaten 27-29 gleich eingestellt sind, insbesondere eine gleiche Temperatur-Öffnungsgradkennlinie aufweisen, dann kann man den Ausgangsverteiler 11 mehr oder weniger einbauen und dann vergessen. Natürlich kann durch Hineinschrauben oder Herausschrauben des Einsatzes 51 im Fortsatz 52 noch eine gewisse Feineinstellung vornehmen, wenn dies erforderlich ist. In den meisten Fällen wird dies jedoch nicht einmal erforderlich sein. Eine derartige Heizungsanordnung arbeitet auch unter wechselnden äußeren Bedingungen zuverlässig, d.h. sie passt den Abgleich der Heizkreise dynamisch an.

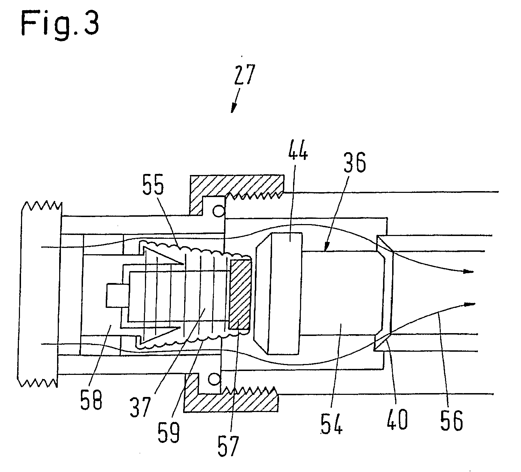

Fig. 3 zeigt eine abgewandelte Ausführungsform eines Rücklaufthermostaten 27. Gleiche Teile wie in den Fig. 1 und 2 sind mit den gleichen Bezugszeichen versehen.

Das Thermostatelement 36 ist als Wachspatrone ausgebildet, d.h. es weist ein Gehäuse 54 auf, aus dem ein auch als "Stößel" bezeichneter Fortsatz 37 herausragt. Mit steigender Temperatur wird der Fortsatz 37 weiter aus dem Gehäuse 54 herausgedrängt. Bei sinkender Temperatur, wenn der Dehnstoff im Inneren des Gehäuses 54 sein Volumen verkleinert, kann der Fortsatz 37 weiter in das Gehäuse 54 hineingeschoben werden.

Zwischen dem Gehäuse 54 und dem Fortsatz 37 ist ein Spalt vorhanden, der durch eine Dichtung 55 gegenüber dem Heizungswasser, das durch Pfeile 56 symbolisiert sein soll, abgedichtet ist. Die Dichtung 55 ist am Gehäuse 54 durch einen Klemmring 57 befestigt. Mit dem Fortsatz 37 ist sie über einen Käfig 58 verbunden, der zum Fortsatz 37 hin geschlossen ist. Durch die Dichtung 55 wird also ein Vordringen von Heizungswasser 56 in den Spalt zwischen dem Fortsatz 37 und dem Gehäuse 54 verhindert.

Gleichzeitig hat die Dichtung 55 noch eine zweite Aufgabe. Sie ist nämlich als Rückstellfeder ausgebildet, d.h. sie übt auf den Fortsatz 37 eine Zugkraft aus, die in Richtung auf das Gehäuse 54 wirkt.

Die Dichtung 55 weist einen gewellten Mantel 59 auf, der beispielsweise aus einem Metall nach Art eines Wellrohrs oder auch aus einem Elastomer gebildet sein kann. Der Mantel 59 lässt aufgrund seiner Wellung einen relativ großen Hub des Fortsatzes 37 gegenüber dem Gehäuse 54 zu. Gleichzeitig übt die Dichtung 55 aber ausreichende Rückstellkräfte auf den Fortsatz 37 aus.

Die Fußbodenheizungs-Anordnung nach Fig. 1 weist Rücklaufthermostaten 27-29 auf, die mit einem Thermostatelement 36 arbeiten. Das Thermostatelement 36 wirkt dabei gleichzeitig als Temperatursensor und als Verstelleinrichtung.

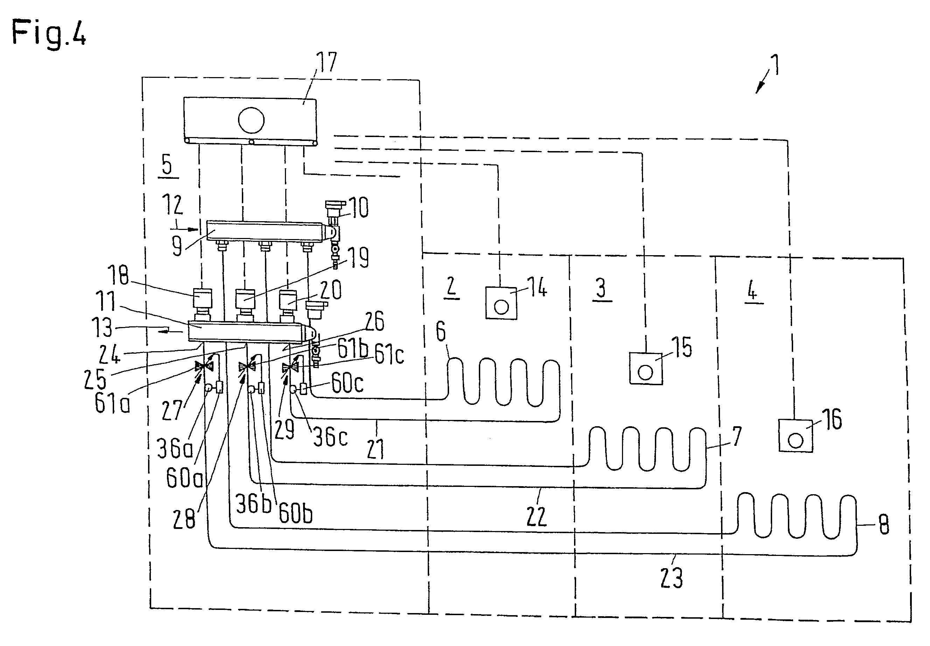

Fig. 4 zeigt eine abgewandelte Ausgestaltung, bei der die Rücklaufthermostaten 27-29 elektrisch arbeiten. Hierzu ist in jeder Rücklaufleitung 21-23 ein Temperatursensor 36a-36c angeordnet. Jeder Temperatursensor 36a-36c ermittelt die Temperatur im Rücklauf 21-23 und meldet sie an einen Regler 60a-60c weiter. Der Regler 60a-60c wiederum betätigt ein verstellbares Ventil 61a-61c, um die Menge des Wärmeträgermediums mehr oder weniger stark zu drosseln. Diese Verstellung der Ventile 61 a-61 c wird so lange fortgesetzt, bis die Temperatur des den jeweiligen Rücklauf 21-23 durchströmenden Wärmeträgermediums den gewünschten Wert erreicht hat.

In einer Abwandlung dieser Ausführungsform kann vorgesehen sein, dass die Temperatursensoren 36a-36c die in den Rücklaufleitungen 21-23 ermittelten Temperaturen an einen zentralen Regler, z.B. den Regler 17, melden, der dann wiederum die Ventile 61a-61c entsprechend verstellt. Die entsprechenden Informationen und Signale können leitungsgebunden oder leitungslos übertragen werden.

## Patentansprüche

1. Abgleichsystem für eine Fußbodentemperierungs-Anordnung mit mindestens zwei Temperierungskreisen, von denen jeder eine in einem Fußboden oder in einer Deckenwand verlegte Wärmeträgerleitung mit einem Vorlauf und einem Rücklauf aufweist, wobei an jedem Rücklauf (21-23) ein Rücklauftemperaturregler (27-29) mit einem die Temperatur im jeweiligen Rücklauf erfassenden Temperatursensor (36) angeordnet ist und alle Rücklauftemperaturregler (27-29) ein gleiches Temperatursteuerverhalten aufweisen, wobei der Temperatursensor (36) als Thermostatelement (36) ausgebildet ist und der Rücklauftemperaturregler (27-29) eine Warmwasserdrosselstelle (40-42) mit einem ersten Ventilsitz (40) aufweist, der mit einem ersten vom Thermostatelement (36) betätigten Ventilelement (41) zusammenwirkt, **dadurch gekennzeichnet, dass** der Rücklauftemperaturregler (27-29) eine Kaltwasserdrosselstelle (41,44) mit einem zweiten Ventilsitz (43) aufweist, der mit einem zweiten von einem Aktuatorelement betätigten Ventilelement (44) zusammenwirkt.

2. Abgleichsystem nach Anspruch 1, **dadurch gekennzeichnet, dass** ein Verteiler vorgesehen ist, in den jeder Rücklauf mit einem Anschluss mündet, wobei der Rücklauftemperaturregler (27-29) dem Anschluss zugeordnet ist.

3. Abgleichsystem nach Anspruch 1, **dadurch gekennzeichnet, dass** das Aktuatorelement als Thermostatelement (36) ausgebildet ist.

4. Abgleichsystem nach einem der Ansprüche 1 bis 3, **dadurch gekennzeichnet, dass** beide Ventilelemente (41,44) vom gleichen Aktuatorelement, insbesondere Thermostatelement (36) betätigt sind.

5. Abgleichsystem nach einem der Ansprüche 1 bis 4, **dadurch gekennzeichnet, dass** mindestens ein Ventilelement (40,44) durch das jeweils zugeordnete Aktuatorelement, insbesondere Thermostatelement (36) gebildet ist.

6. Abgleichsystem nach einem der Ansprüche 4 oder 5, **dadurch gekennzeichnet, dass** das Aktuatorelement, insbesondere das Thermostatelement (36) eine Durchmesservergrößerung aufweist, die das zweite Ventilelement (44) bildet.

7. Abgleichsystem nach einem der Ansprüche 1 bis 6, **dadurch gekennzeichnet, dass** der Rücklauftemperaturregler (27-29) innerhalb einer mit dem Anschluss (24-26) verbundenen Leitung (31) angeordnet ist.

8. Abgleichsystem nach einem der Ansprüche 1 bis 7, **dadurch gekennzeichnet, dass** das mindestens eine Aktuatorelement, insbesondere das mindestens eine Thermostatelement (36) eine in Strömungsrichtung veränderbare Länge aufweist.

9. Abgleichsystem nach einem der Ansprüche 1 bis 8, **dadurch gekennzeichnet, dass** eine Trenneinrichtung (33) vorgesehen ist, die das Aktuatorelement, insbesondere das Thermostatelement (36) vom Wärmeträgermedium in eine Sammelleitung (34) des Verteilers trennt, von der die Anschlüsse (24-26) abzweigen.

10. Abgleichsystem nach Anspruch 9, **dadurch gekennzeichnet, dass** eine bewegliche Ventilsitzeinrichtung, insbesondere die Trenneinrichtung (33) den ersten Ventilsitz (40) bildet.

11. Abgleichsystem nach Anspruch 10, **dadurch gekennzeichnet, dass** die bewegliche Ventilsitzeinrichtung, insbesondere die Trenneinrichtung (33) von außen in Richtung der Längenänderung des Aktuatorelements, insbesondere des Thermostatelements (36) verlagerbar ist.

12. Abgleichsystem nach einem der Ansprüche 10 oder 11, **dadurch gekennzeichnet, dass** die bewegliche Ventilsitzeinrichtung, insbesondere die Trenneinrichtung (33) auf der dem ersten bzw. dem zweiten Ventilsitz (40) gegenüberliegenden Seite einen dritten Ventilsitz (45) bildet, der mit einem dritten Ventilelement (46) zusammenwirkt, das von außen betätigbar ist.

13. Abgleichsystem nach Anspruch 12, **dadurch gekennzeichnet, dass** das dritte Ventilelement (46) in einem Einsatz (51) gelagert ist, an dem die bewegliche Ventilsitzeinrichtung, insbesondere die Trenneinrichtung (33) befestigt ist.

14. Abgleichsystem nach Anspruch 13, **dadurch gekennzeichnet, dass** der Einsatz (51) im Gehäuse (52) parallel zur Richtung der Längenänderung des dem ersten bzw. dem zweiten Ventilelement (41) zugeordneten Aktuatorelements, insbesondere Thermostatelements verlagerbar ist.

15. Abgleichsystem nach einem der Ansprüche 1 bis 14, **dadurch gekennzeichnet, dass** der mindestens eine Temperatursensor (36) als Dehnstoffelement mit Feststoff-Füllung ausgebildet ist.

16. Abgleichsystem nach einem der Ansprüche 1 bis 15, **dadurch gekennzeichnet, dass** jedes Aktuatorelement, insbesondere jedes Thermostatelement (36) eine Rückstelleinrichtung (38) aufweist.

17. Abgleichsystem nach einem der Ansprüche 1 bis 16, **dadurch gekennzeichnet, dass** das Aktuatorelement, insbesondere das Thermostatelement (36) eine Dichtung (55) aufweist, die einen Spalt zwischen zwei gegeneinander bewegbaren Teilen (54,37) abdichtet, wobei die Dichtung (55) als Rückstellfeder ausgebildet ist.

18. Abgleichsystem nach Anspruch 17, **dadurch gekennzeichnet, dass** die Dichtung (55) einen gewellten Mantel (59) aufweist.

19. Abgleichsystem nach einem der Ansprüche 1 bis 18, **dadurch gekennzeichnet, dass** der Rücklauftemperaturregler (27-29) als elektrisch arbeitende Regelvorrichtung ausgebildet ist.

## Claims

1. Equalization system for a floor temperature-control arrangement, having at least two temperature-control circuits, of which each has a heat transfer line which is laid in a floor or in a ceiling and has a feed and a return, wherein a return temperature regulator (27-29) having a temperature sensor (36) detecting the temperature in the respective return is arranged on each return (21-23), and all of the return temperature regulators (27-29) have an identical temperature control behaviour, wherein the temperature sensor (36) is designed as a thermostatic element (36), and the return temperature regulator (27, 29) has a hot water constriction point (40-42) with a first valve seat ,(40) which interacts with a first valve element (41) which is actuated by the thermostatic element (36), **characterized in that** the return temperature regulator (27-29) has a cold water constriction point (41, 44) with a second valve seat (43) which interacts with a second valve element (44) which is actuated by an actuator element.

2. Equalization system according to Claim 1, **characterized in that** a distributor is provided, into which each return opens with a connection, wherein the return temperature regulator (27-29) is assigned to the connection.

3. Equalization system according to Claim 1, **characterized in that** the actuator element is designed as a thermostatic element (36).

4. Equalization system according to one of Claims 1 to 3, **characterized in that** the two valve elements (41, 44) are actuated by the same actuator element, in particular thermostatic element (36).

5. Equalization system according to one of Claims 1 to 4, **characterized in that** at least one valve element (40, 44) is formed by the respectively assigned actuator element, in particular thermostatic element (36).

6. Equalization system according to either of Claims 4 and 5, **characterized in that** the actuator element, in particular the thermostatic element (36), has an increase in diameter that forms the second valve element (44).

7. Equalization system according to one of Claims 1 to 6, **characterized in that** the return temperature regulator (27-29) is arranged within a line (31) connected to the connection (24-26).

8. Equalization system according to one of Claims 1 to 7, **characterized in that** the at least one actuator element, in particular the at least one thermostatic element (36), has a length which is changeable in the flow direction.

9. Equalization system according to one of Claims 1 to 8, **characterized in that** a separating device (33) is provided which separates the actuator element, in particular the thermostatic element (36), from the heat transfer medium into a collecting line (34) of the distributor, from which collecting line the connections (24-26) branch off.

10. Equalization system according to Claim 9, **characterized in that** a movable valve seat device, in particular the separating device (33), forms the first valve seat (40).

11. Equalization system according to Claim 10, **characterized in that** the movable valve seat device, in particular the separating device (33), can be shifted from the outside in the direction of the change in length of the actuator element, in particular of the thermostatic element (36).

12. Equalization system according to either of Claims 10 and 11, **characterized in that**, on the side opposite the first or the second valve seat (40), the movable valve seat device, in particular the separating device (33), forms a third valve seat (45) which interacts with a third valve element (46) which is actuable from the outside.

13. Equalization system according to Claim 12, **characterized in that** the third valve element (46) is mounted in an insert (51) to which the movable valve seat device, in particular the separating device (33), is fastened.

14. Equalization system according to Claim 13, **characterized in that** the insert (51) can be shifted in the housing (52) parallel to the direction of the change in length of the actuator element, in particular thermostatic element, assigned to the first or the second valve element (41).

15. Equalization system according to one of Claims 1 to 14, **characterized in that** the at least one temperature sensor (36) is designed as an expansion element with a solid filling.

16. Equalization system according to one of Claims 1 to 15, **characterized in that** each actuator element, in particular each thermostatic element (36), has a resetting device (38).

17. Equalization system according to one of Claims 1 to 16, **characterized in that** the actuator element, in particular the thermostatic element (36), has a seal (55) which seals a gap between two parts (54, 37) which are movable in relation to each other, wherein the seal (55) is designed as a resetting spring.

18. Equalization system according to Claim 17, **characterized in that** the seal (55) has a corrugated casing (59).

19. Equalization system according to one of Claims 1 to 18, **characterized in that** the return temperature regulator (27-29) is designed as an electrically operating control device.

## Revendications

1. Système d'équilibrage pour un dispositif d'équilibrage des températures au sol avec au moins deux circuits d'équilibrage des températures, dont chacun comporte un conduit caloporteur posé dans un sol ou dans un plafond, avec un conduit aller et un conduit retour, sur chaque conduit retour (21 à 23) étant placé un thermorégulateur de retour (27 à 29) avec un capteur de température (36) détectant la température dans le conduit retour concerné et tous les thermorégulateurs de retour (27 à 29) faisant preuve d'un comportement identique à la commande de la température, le capteur de température (36) étant conçu en tant qu'élément thermostatique (36) et le thermorégulateur de retour (27 à 29) comportant un point d'étranglement (40 à 42) d'eau chaude avec un premier siège de soupape (40) qui coopère avec un premier élément de soupape (41) manoeuvré par l'élément thermostatique (36), **caractérisé en ce que** le thermorégulateur de retour (27 à 29) comporte un point d'étranglement (41, 44) d'eau froide avec un deuxième siège de soupape (43) qui coopère avec un deuxième élément de soupape (44) manoeuvré par un élément actionneur.

2. Système d'équilibrage selon la revendication 1, **caractérisé en ce qu'**il est prévu un distributeur dans lequel chaque conduit retour débouche par un raccord, le thermorégulateur de retour (27 à 29) étant associé au raccord.

3. Système d'équilibrage selon la revendication 1, **caractérisé en ce que** l'élément actionneur est conçu en tant qu'élément thermostatique (36).

4. Système d'équilibrage selon l'une quelconque des revendications 1 à 3, **caractérisé en ce que** les deux éléments de soupape (41, 44) sont manoeuvrés par le même élément actionneur, notamment élément thermostatique (36).

5. Système d'équilibrage selon l'une quelconque des revendications 1 à 4, **caractérisé en ce qu'**au moins un élément de soupape (40, 44) est formé par l'élément actionneur, notamment l'élément thermostatique (36) respectivement associé.

6. Système d'équilibrage selon l'une quelconque des revendications 4 ou 5, **caractérisé en ce que** l'élément actionneur, notamment l'élément thermostatique (36) présente une augmentation de diamètre qui forme le deuxième élément de soupape (44).

7. Système d'équilibrage selon l'une quelconque des revendications 1 à 6, **caractérisé en ce que** le thermorégulateur de retour (27 à 29) est placé à l'intérieur d'un conduit (31) relié avec le raccord (24 à 26).

8. Système d'équilibrage selon l'une quelconque des revendications 1 à 7, **caractérisé en ce que** l'au moins un élément actionneur, notamment l'au moins un élément thermostatique (36) présente une longueur variable dans la direction d'écoulement.

9. Système d'équilibrage selon l'une quelconque des revendications 1 à 8, **caractérisé en ce qu'**il est prévu un dispositif de séparation (33) qui sépare l'élément actionneur, notamment l'élément thermostatique (36) du fluide caloporteur dans un conduit collecteur (34) du distributeur à partir duquel dérivent les raccords (24 à 26).

10. Système d'équilibrage selon la revendication 9, **caractérisé en ce qu'**un dispositif mobile de siège de soupape, notamment le dispositif de séparation (33) forme le premier siège de soupape (40).

11. Système d'équilibrage selon la revendication 10, **caractérisé en ce que** le dispositif mobile de siège de soupape, notamment le dispositif de séparation (33) est déplaçable de l'extérieur en direction de la variation de longueur de l'élément actionneur, notamment de l'élément thermostatique (36).

12. Système d'équilibrage selon l'une quelconque des revendications 10 ou 11, **caractérisé en ce que** sur le côté opposé au premier ou au deuxième siège de soupape (40), le dispositif mobile de siège de soupape, notamment le dispositif de séparation (33) forme un troisième siège de soupape (45) qui coopère avec un troisième élément de soupape (46) qui peut être manoeuvré depuis l'extérieur.

13. Système d'équilibrage selon la revendication 12, **caractérisé en ce que** le troisième élément de soupape (46) est logé dans un insert (51) sur lequel est fixé le dispositif mobile de siège de soupape, notamment le dispositif de séparation (33).

14. Système d'équilibrage selon la revendication 13, **caractérisé en ce que** l'insert (51) est déplaçable dans le corps (52) à la parallèle de la direction de la variation de longueur de l'élément actionneur, notamment l'élément thermostatique associé au premier ou au deuxième élément de soupape (41).

15. Système d'équilibrage selon l'une quelconque des revendications 1 à 14, **caractérisé en ce que** l'au moins un capteur de température (36) est conçu en tant qu'élément en matière expansible avec un remplissage en matière solide.

16. Système d'équilibrage selon l'une quelconque des revendications 1 à 15, **caractérisé en ce que** chaque élément actionneur, notamment chaque élément thermostatique (36) comporte un dispositif de rappel (38).

17. Système d'équilibrage selon l'une quelconque des revendications 1 à 16, **caractérisé en ce que** l'élément actionneur, notamment l'élément thermostatique (36) comporte un joint (55) qui assure l'étanchéité d'une fente entre deux pièces (54, 37) mobiles l'une contre l'autre, le joint (55) étant conçu en tant que ressort de rappel.

18. Système d'équilibrage selon la revendication 17, **caractérisé en ce que** le joint (55) présente une enveloppe (59) ondulée.

19. Système d'équilibrage selon l'une quelconque des revendications 1 à 18, **caractérisé en ce que** le thermorégulateur de retour (27 à 29) est conçu en tant que dispositif de régulation à fonctionnement électrique.
